# EUROPÄISCHE PATENTANMELDUNG

(11) **EP 2 306 379 A1**
(43) Veröffentlichungstag der Anmeldung: **06.04.2011**
(21) Anmeldenummer: 10008158.7
(22) Anmeldetag: 05.08.2010
(51) Int. Cl.: G06Q 10/00

(54) **Verfahren zum Steuern von Material- und/oder Informationsströmen**

(30) Priorität: 05.10.2009 DE 102009048210
(71) Anmelder: Dr. Ing. h.c. F. Porsche AG, 70435 Stuttgart (DE)
(72) Erfinder: Macht, Michael, 70435 Stuttgart (DE); Wels, Juergen, 71701 Schwieberdingen (DE); Schulz, Peter, 70734 Fellbach (DE); Will, Christian, 71701 Schwieberdingen (DE); Seidl, Karsten, 70469 Stuttgart (DE); Coels, Herbert, 74343 Sachsenheim (DE); Raichle, Michael, 71277 Rutesheim (DE); Schreck, Andreas, 71706 Markgröningen (DE)

(57) **Zusammenfassung**

Die Erfindung betrifft ein Verfahren zur Steuerung von Materialien und/oder Informationen für eine Fertigung von Produkten, insbesondere von Fahrzeugen oder Fahrzeugkomponenten, vom Lieferanten des benötigten Materials, insbesondere Bauteile, Module oder Sätze, bis zum Verbauort an einer Arbeitsstation einer Linienproduktion in einem Produktionswerk (1) mit folgenden Schritten:
a) Festlegung einer stabilen Planreihenfolge für die zu fertigenden Produkte innerhalb eines definierten Produktionszeitraums zu einem dem Beginn dieses Produktionszeitraums vorgelagerten Zeitpunkt (X),
b) Ermittlung eines Bedarfszeitpunktes, an dem das jeweilige Material am Verbauort benötigt wird, auf Basis der Planreihenfolge,
c) Ermittlung eines exakten Bedarfszeitpunktes, an dem das jeweilige Material an einem Wareneingang der Linienproduktion angeliefert werden soll, ausgehend vom Bedarfszeitpunkt unter Berücksichtigung einer Offsetzeit, die sich aus allen Prozesszeiten zwischen Wareneingang und Verbauort sowie einer Dispovorlaufzeit, die einen Risikoaufschlag abbildet, zusammensetzt,
d) Bündelung der gleicher bzw. gleichartiger Materialien zu einem bedarfsgerechten Los unter Berücksichtigung der Kapazität der verwendeten Betriebsmittel,
e) Ermittlung des Abholzeitpunktes, an dem das Los spätestens beim Warenausgang Lieferanten des Materials abgeholt werden muss, ausgehend vom Bedarfszeitpunkt im

Wareneingang Produktionswerk auf Basis von Frachtlaufzeiten zwischen dem Lieferanten, einem Umschlagpunkt und dem Wareneingang.

## Beschreibung

Die Erfindung betrifft Verfahren zur Steuerung von Material- und/oder Informationsströmen für eine Fertigung von Produkten, insbesondere von Fahrzeugen oder Fahrzeugkomponenten.

Aus der Fahrzeugfertigung ist bekannt, dass die zur Fertigung der Fahrzeuge benötigten Teile und/oder Materialien nach Möglichkeit "just-in-time" oder "just-in-sequence" an das Fertigungsband angeliefert werden. Just-in-time bedeutet in dem Zusammenhang, dass die Anlieferung der benötigten Materialien genau zur richtigen Zeit, in der richtigen Menge, am richtigen Ort und der richtigen Qualität erfolgt. Just-in-sequenz bedeutet, dass zusätzlich das Material in der richtigen Reihenfolge angeliefert wird. Beide Arten der Anlieferung haben den Vorteil, dass im Produktionswerk selbst immer weniger Lagerflächen oder Zwischenpuffer vorgesehen werden müssen. Aufgrund weiter zunehmender Varianten der auf einem Fertigungsband gemeinsam gefertigten Produkte, wie Fahrzeuge oder Fahrzeugkomponenten (z.B. Motoren, Getriebe), steigen die Prozesskomplexität sowie die Ressourcenbedarfe bei der Materialbereitstellung an.

Die Aufgabe der Erfindung besteht darin, diesen Nachteil zu beseitigen und eine hohe Prozesssicherheit bei der Bereitstellung von Material am Verbauort zu erreichen.

Die Aufgabe wird durch die Merkmale des Patentanspruchs 1 gelöst. Vorteilhafte Ausgestaltungen der Erfindung ergeben sich aus den Merkmalen der Unteransprüche.

Der Kern der Erfindung liegt darin, dass alle benötigten Materialien, wie Bauteile, Module oder Sätze über die gesamte Prozesskette entsprechend der Planreihenfolge der herzustellenden Produkte gesteuert und in bedarfsgerechten Losgrößen zum richtigen Zeitpunkt an den Verbauort geliefert werden. Dazu wird zu einem dem Beginn des Produktionszeitraums vorgelagerten Zeitpunkt für eben diesen Produktionszeitraum eine Planreihenfolge festgelegt, die volumen- und reihenfolgestabil bleibt. Das bedeutet, dass für den Produktionszeitraum weder die Eigenschaften der zu fertigenden Produkte noch deren Reihenfolge, in der sie auf der Fertigungslinie gefertigt werden, verändert werden. Ausgehend von dieser quasi eingefrorenen Planreihenfolge wird auf Basis von den Produkten zugeordneten Stücklisten der konkrete Bedarfszeitpunkt des jeweils benötigten Materials an seinem Verbauort bestimmt. Ausgehend von diesem Bedarfszeitpunkt werden der exakte Bedarfszeitpunkt im Wareneingang Produktionswerk und der späteste Abholzeitpunkt am Warenausgang Lieferant sozusagen rückwärts ermittelt. Diese Rückwärtsrechnung wird für jedes benötigte Material durchgeführt, wobei die Bündelung von gleichen bzw. gleichartigen Materialien auf Basis der Kapazität der Betriebsmittel erfolgt. Das heißt, dass gleiche Materialien des selben Lieferanten zu einer transportablen, händelbaren Ladeeinheit zusammengefasst werden. Der exakte Bedarfszeitpunkt dieser Ladeeinheit im Wareneingang des Produktionswerkes berechnet sich aus einer sogenannten Offsetzeit, die sich aus allen Prozesszeiten zwischen Wareneingang und Verbauort sowie einer Dispovorlaufzeit, die einen zusätzlichen Risikoaufschlag abbildet, zusammensetzt. Der späteste Abholzeitpunkt beim Warenausgang des jeweiligen Lieferanten wird ausgehend vom exakten Bedarfszeitpunkt im Wareneingang des Produktionswerkes auf Basis von Frachtlaufzeiten zwischen dem Lieferanten, einem Umschlagpunkt und dem Wareneingang ermittelt. Mit diesem Verfahren können alle für die Herstellung des Produkts benötigten Materialien, wie Bauteile, Module oder Sätze, über einen exakten Zeit- und Ablaufplan, in den sämtliche Lieferanten eingebunden sind, in hoher Frequenz und mit geringer Vorlaufzeit vor der Weiterverarbeitung an den Verbauort angeliefert und sofort weiterverarbeitet werden. Da das Verfahren für jedes benötigte Material angewendet werden kann, wird nur das Material vom jeweiligen Lieferanten beschafft, dass auch gemäß der Reihenfolge der zu fertigenden Produkte benötigt wird. Sicherheitsreserven werden nur über den zeitlichen Vorlauf und nicht über Zusatzmengen, die ggf. zwischengelagert werden müssten, gebildet. Mit diesem Verfahren lassen sich nicht nur Materialien beschaffen, die in der gleichen Reihenfolge wie die zu fertigenden Produkte zur Verfügung gestellt werden, sondern auch Verbrauchsmaterialien, die sortenrein geliefert werden.

Um den jeweiligen Lieferanten entsprechenden Vorlauf für die Produktion des benötigten Materials zu gewähren, kann zum vorgelagerten Zeitpunkt ein Materialabruf für den definierten Produktionszeitraum an den jeweiligen Lieferanten übermittelt werden. Durch den gezielten Materialabruf, der zumindest auch den exakten Bedarfszeitpunkt im Wareneingang Produktionswerk oder ein korrespondierendes Zeitfenster umfasst, lässt sich eine hohe Transparenz in allen Prozessstufen der Fertigung erreichen und die hohe Komplexität bei der Fertigung von Produkten, wie Fahrzeuge bzw. Fahrzeugkomponenten auf einer geringen Fläche abbilden. Der Materialabruf verhindert unnötige Kapital- und Mittelbindung bei der Zwischenlagerung von Materialien.

Parallel dazu kann derselbe Materialabruf zum vorgelagerten Zeitpunkt an einen Transportdienstleister übermittelt werden, der den Transport der Materialien vom Warenausgang des Lieferanten an den Wareneingang Produktionswerk durchführt.

Die Materialabrufe beinhalten neben den üblichen Angaben, wie Produktionsnummer, Empfänger und Absender, die genaue Warenanlieferungsstelle im Produktionswerk, die interne Nachschubroute sowie den exakten Bedarfszeitpunkt im Wareneingang Produktionswerk. Der Wareneingang ist dabei so zu gestalten, dass das Material einer Anlieferung bis zur nächsten Anlieferung verteilt ist. Angeliefertes Material wird durch einen Scanvorgang auf die Anzahl von Ladeeinheiten kontrolliert. Der Scanvorgang initiiert alle weiteren Buchungsvorgänge.

In einem ersten Teilprozess in der Prozesskette zwischen dem Werk und dem Lieferanten ist vorgesehen, dass der Lieferant das abgerufene Material produziert und dieses in vorgegebenen Ladeeinheiten, für die tägliche Abholung (oder: zum vereinbarten Abholzeitpunkt) durch einen Transportdienstleister an seinem Warenausgang bereitstellt. Das Material verbleibt während des gesamten Transports vorzugsweise bis zum Verbauort oder zur Kommissionierung/Sequenzierung in dieser Ladeeinheit.

In einem zweiten Teilprozess transportiert ein Transportdienstleister das bereitgestellte Material vom Lieferanten zu einem Umschlagpunkt, an welchem das Material einem mit dem jeweiligen exakten Bedarfszeitpunkt im Wareneingang Produktionswerk korrespondierenden Zeitfenster zugeordnet wird. Die Größe des Zeitfensters ist frei wählbar und ermöglicht einen zeitlichen Ausgleich aufgrund etwaiger Transportschwankungen. Der Umschlagpunkt fungiert insofern als Frequenzrichter. Der Umschlagpunkt nimmt rein speditionelle Funktionen wahr. Das heißt, hier erfolgt keine Bestandsführung oder Labelung. Die angelieferten Ladeeinheiten bleiben erhalten. Ankommendes Leergut hat Lieferantenbezug und wird nicht verändert. Das Leergut wird wie das Vollgut in einem Handlingsschritt den Ausgangsrelationen zusortiert.

Zwischen dem Umschlagpunkt und dem Wareneingang verkehrt wenigstens ein Shuttle entsprechend der festgelegten Zeitfenster, um das angeforderte Material bedarfsgerecht bereitzustellen.

Am Wareneingang Produktionswerk wird das zu einem bestimmten Zeitfenster angelieferte Material zusammen mit der Ladeeinheit auf ein internes Transportmittel, bspw. einen Schleppzug, entladen. Der Schleppzug fährt in einer bestimmten an der Taktzeit der Linie orientierten Frequenz. Das Material wird mit dem Schleppzug entweder an den Verbauort direkt oder in einer Kommissionier- bzw. Sequenzierzone bereitgestellt, an denen das Material fahrzeugbezogen kommissioniert oder stationsbezogen sequenziert wird. Fahrzeugspezifische Kommissionierung bedeutet in dem Zusammenhang, das auf Basis des zu fertigenden Produkts und der zugeordneten Stückliste nach der Produktionsreihenfolge ein Kommissionierwagen für ein konkretes Produkt mit mehreren Bauteilen, Modulen oder Sätzen bestückt und über mehrere Arbeitsstationen mitgeführt wird. Stationsbezogene Sequenzierung bedeutet, dass auf Basis des zu fertigenden Produkts und der zugeordneten Stückliste nach der Produktionsreihenfolge ein Transportwagen für mehrere aufeinander folgende Produkte mit Bauteilen, Modulen oder Sätzen bestückt und an eine Arbeitsstation angestellt wird.

Für die zeitgenaue Verfügbarkeit des Materials am Verbauort, ist diesem ein Meldepunkt in der Fertigungslinie vorgeschaltet, in dem ein dem Produkt entsprechender Kommissionierauftrag ausgelöst wird. Ab diesem Meldepunkt kann die Reihenfolge der zu fertigenden Produkte bis zum Verbauort nicht mehr verändert werden, d.h. spätestens ab diesem Meldepunkt besteht nunmehr eine Ist-Reihenfolge, in der die Produkte tatsächlich gefertigt werden.

Ein weiterer Einflussfaktor auf die Steuerung von Materialströmen kann die Anlieferform und damit korrespondierend die Anliefermenge des jeweiligen Materials sein. Unter Anlieferform ist die Ladeeinheit zu verstehen, mit der das Material vom Lieferanten über den Umschlagpunkt und Wareneingang bis zum Bedarfsort transportiert wird. Der Bedarfsort ist entweder eine Kommissionier- oder Sequenzierzone oder direkt der Verbauort. In Abhängigkeit dieser Losgrößen ist die theoretisch erforderliche Anlieferfrequenz entsprechend anzupassen. Bei der Wahl der Anliefermenge und Anlieferform sowie der Anlieferfrequenz ist zu berücksichtigen, dass möglichst nur ein Handlingsschritt vom Wareneingang bis zum Verbauort bzw. zur Kommissionier- oder Sequenzierzone notwendig ist. Die Anlieferfrequenz sagt aus, wie häufig ein Material täglich in den Wareneingang des Produktionswerks geliefert werden muss, um den Bedarf des Materials zu decken. Dabei sollte die Anliefermenge direkt in das ausgewählte Betriebsmittel passen bzw. von diesem aufgenommen werden können. Die Kapazität der Betriebsmittel am Verbauort bzw. an der Kommissionier- oder Sequenzierzone bestimmt u.a. die Anliefermenge, die Anliefereinheit und daraus resultierende theoretisch erforderliche Anlieferfrequenz. Die maximale Anlieferfrequenz über alle Materialien bzw. Bauteile gibt den theoretisch erforderlichen Shuttletakt vor. Ist die errechnete Anlieferfrequenz höher als der verfügbare Shuttletakt, bestehen folgende Alternativen:
- Erhöhung der Betriebsmittelkapazität,
- Erhöhung des Shuttletakts,
- Abwicklung über einen sogenannten Supermarkt.

Je nach der Art der Bandanstellung des Materials am Verbauort lässt sich der Versorgungsprozess ableiten. Bandanstellung bedeutet wie oben erwähnt, ob das Material fahrzeugbezogen kommissioniert, stationsbezogen sequenziert oder stationsbezogen sortenrein bereitgestellt wird. Die Wahl der Bandanstellung am Verbauort wird u.a. nach den Kriterien entschieden:
- Anzahl Bauteilvarianten,
- Bauteilverbauquote,
- Bauteilgeometrie,
- Bauteilgewicht sowie
- Behälterauslegung.

Die Verpackung der Bauteile, Modulen oder Sätze sollte in manuell handhabbaren, standardisierten Ladungsträgern erfolgen, wobei eine Ladeeinheit mehrere Ladungsträger umfasst, die auf einer Grundpalette zusammengefasst sind und i.d.R. mit einem Deckel abgeschlossen werden. Ladungsträger können nach folgenden Kriterien dimensioniert werden:
- maximales Gesamtgewicht der Ladungsträger: 15 kg,
- Vermeidung von zu entsorgendem Einweg-Packmaterial,
- ergonomische Entnahme möglich,
- Bauteil, Modul oder Satz passt mit sinnvoller Packdichte in die Ladungsträger,
- Schutz der Bauteile, Module oder Sätze vor Transportschäden.

Es sollte ein und derselbe Ladungsträger für alle Varianten eines Bauteils, Moduls oder Satzes eingesetzt werden können, wobei Sonderladungsträger nicht auszuschließen sind. Unterschieden werden im Wesentlichen folgende Ladungsträger:
- Kleinladungsträger,
- Großladungsträger,
- Extragroßladungsträger.

Um das Handling der Ladeeinheiten bzw. Ladungsträger in einem Schritt realisieren zu können, sind entsprechende Betriebsmittel einzusetzen. Dabei sollte zur manuellen Vereinzelung von Kleinladungsträger ergonomisches Handling bevorzugt werden. Querverschiebungen für nicht manuell handhabbare Ladungsträger sind zu bevorzugen. Zur Unterstützung der ergonomischen Handhabung und zur Reduzierung des manuellen Aufwandes können die Betriebsmittel entsprechend technisiert bzw. automatisiert werden. Dabei sollte der Vollgut-Leerguttausch ermöglicht sein.

Bei bedarfsorientierten Abrufmengen von Materialien richtet sich der exakte Bedarfszeitpunkt im Wareneingang des Produktionswerkes nach dem in der Gesamtheit der Anliefermenge enthaltenen Material, das zuerst am Verbauort benötigt wird.

Die Frachtlaufzeiten zwischen Lieferant und Wareneingang gehen wie oben beschrieben in die Berechnung des spätesten Abholzeitpunkts des Materials beim Lieferanten ein. Zuzüglich zu den reinen Frachtlaufzeiten können als weitere Sicherheitsreserven Transportrisikozeiten mit berücksichtigt werden. Die Frachtlaufzeiten und die Transportrisikozeiten können in einer gemeinsamen Frachtlaufzeitentabelle abgebildet werden, die für jedes Material in Verbindung mit dem entsprechenden Lieferanten die entsprechenden Zeiten auflistet.

Unter Offsetzeit ist im Sinne der Erfindung die Zeit zu verstehen, die sich aus den Prozesszeiten zwischen dem Verbauort und dem Wareneingang Produktionswerk ergibt, sowie zusätzlich eine Dispovorlaufzeit enthält. Die Dispovorlaufzeit umfasst alle Risikozeiten zwischen dem Verbauort und letztem Umschlagsort vor dem Wareneingang Produktionswerk. Damit können Shuttleverspätungen, Materialausfälle oder unregelmäßige Abfahrts- oder Ankunftszeiten ausgeglichen werden. Die Offsetzeit zwischen Wareneingang und Verbauort ergibt sich im Wesentlichen aus folgenden Prozessschritten beim Handling des Materials:
- Transport vom Umschlag in der externen Transportkette zum Wareneingang
- Abladung Shuttle
- Beladung Schleppzug
- ggf. Transport zur Kommissionierzone bzw. Sequenzierzone
- ggf. Kommissionierung bzw. Sequenzierung
- Transport zum Verbauort.

Sowohl die Dispovorlaufzeit als auch die Transportrisikozeiten bilden, wie erwähnt, eine Sicherheitsreserve für die bedarfsgerechte Bereitstellung von Material am Verbauort zum Bedarfszeitpunkt. Wenn das Material aufgrund von Prozessschwankung und/oder Nichteintreten von Risiko vor dem berechneten Bedarfszeitpunkt am Verbauort eintrifft, kann eine räumliche Freilassung für das zunächst noch nicht benötigte Material am Verbauort einkalkuliert werden. Der Platzbedarf für eine derartige Freilassung ist u.a. abhängig von der Kapazität der verwendeten Betriebsmittel und der entsprechenden Ladeeinheiten sowie von der Eintaktung des Shuttles. Die Freilassung setzt sich aus der Risikozeit vom letzen Umschlag in der externen Transportkette bis zum Bedarfsort und der Shuttle-Eintaktung zusammen. Diese Eintaktung meint in diesem Zusammenhang das Zeitintervall zwischen aufeinander folgenden Anlieferungen des Shuttles vom letzten Umschlag in der externen Transportkette bis zum Wareneingang Produktionswerk..

Um Leerfahrten von Transportmitteln zu vermeiden, können Ladeeinheiten, auf denen das Material bis zum Verbauort angeliefert wird, konsequent in einem Vollgut- / Leergut-Kreislauf gehalten werden. Das bedeutet, dass voll angelieferte Ladeeinheiten für den Rücktransport durch leere Ladeeinheiten ersetzt werden. Die Kreislaufplanung der Ladeeinheiten erfolgt auf der Basis von Durchsatz und Umlauftagen.

Die Berechnung des o.g. Zeitpunkte für alle benötigten Materialien kann auf Basis einer in einem Computerprogrammprodukt abgespeicherten Stückliste und dem entsprechenden Produktionsprogramm erfolgen. Die Berechnung des Bedarfszeitpunktes an den Verbauorten wird durch das Produktionsprogramm ermittelt.

Eine vorteilhafte Ausgestaltung der Erfindung wird im folgenden anhand der Zeichnung näher erläutert. Dabei zeigen:
- Fig. 1: eine schematische Darstellung einer Fertigungslinie,
- Fig. 2: ein schematischer Ablaufplan für eine Fertigungslinie,
- Fig. 3: Arten der Materialbereitstellung.

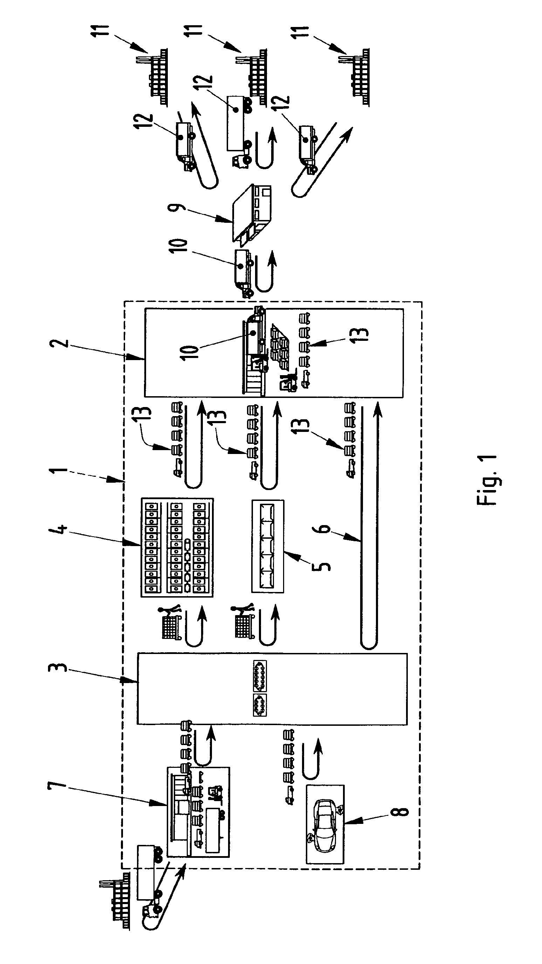

Fig. 1 zeigt eine schematische Darstellung einer Fertigungslinie in einem Produktionswerk und deren Materialströme. Die Werksgrenze des Produktionswerks 1 ist mit einer gestrichelten Linie dargestellt. Das Werk 1 umfasst einen Wareneingang 2 und eine Fertigungslinie 3. Zwischen dem Wareneingang und der Fertigungslinie 3 kann eine Kommissionierzone 4 sowie eine Sequenzierzone 5 angeordnet sein. Das am Wareneingang 2 angelieferte Material kann aber auch direkt an die Fertigungslinie 3 angestellt werden, was durch den mit Bezugszeichen 6 bezeichneten Pfeil dargestellt ist. Von der Fertigungslinie 3 werden die fertigen Produkte bzw. Komponenten zur Weiterverarbeitung in einem anderen Produktionswerk an einen Warenausgang 7 bzw. eine sich anschließende Produktion 8 geleitet und dort weiterverarbeitet.

Dem Werk 1 vorgeschaltet sind Lieferanten 11, die die für die Fertigung benötigten Bauteile, Module oder Sätze, im folgenden als Material bezeichnet, zu einem Umschlagplatz 9 transportieren, der sich vorzugsweise in unmittelbarer Nähe des Werks 1 befindet. Unter Bauteilen werden im wesentlichen Einzelteile verstanden. Module sind i.d.R. Zusammenbauten, bei dem die Teile fest miteinander montiert sind. Ein Satz besteht aus mehreren Bauteilen und Modulen, die untereinander zunächst nicht montiert sind und erst an der Arbeitsstation entsprechend zusammengeführt werden. Der Transport von den Lieferanten 11 erfolgt mittels LKW 12 (oder alternativ mit Bahn oder anderer Transportmittel erfolgen). Vom Umschlagplatz 9 fährt regelmäßig ein Shuttle 10 den Wareneingang 2 des Werks 1 an. Am Umschlagplatz 9 wird das benötigte Material auf Zeitfenster verteilt, das dem zuvor berechneten exakten Bedarfszeitpunkt am Wareneingang 2 entspricht und zu denen der Shuttle 10 das Werk 1 ansteuert. Vom Shuttle 10 wird das Material auf Schleppzüge 13 verteilt, die das Material innerhalb des Werks 1 zum Bedarfsort transportieren. Der Bedarfsort ist in diesem Beispiel entweder die Kommissionierzone 4, die Sequenzierzone 5 oder direkt eine Arbeitsstation am Verbauort 18, der Fertigungslinie 3.

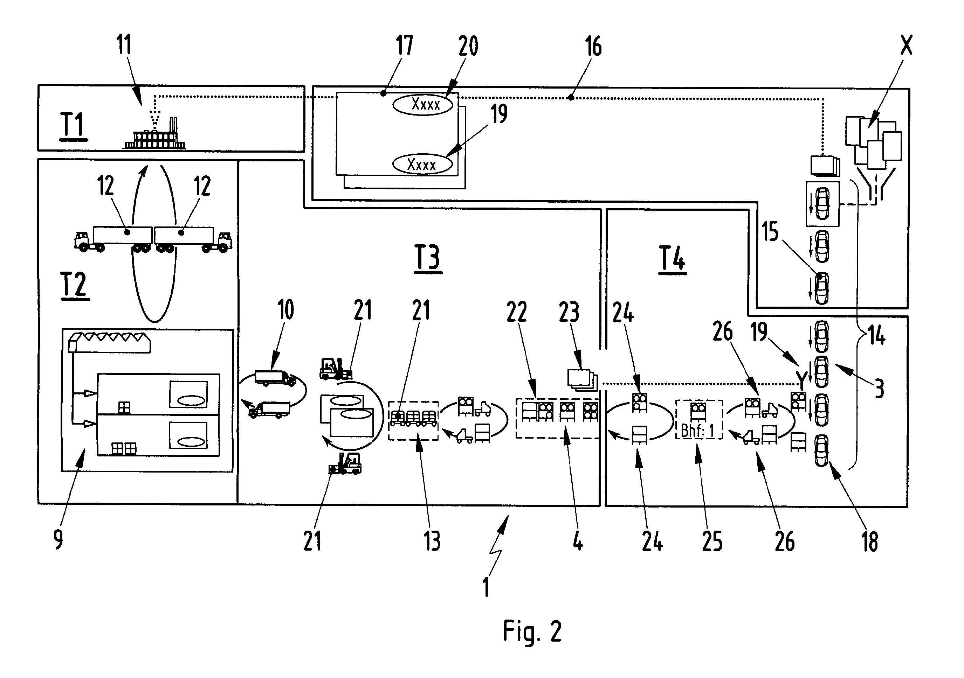

In Fig. 2 wird der zeitliche Ablauf des erfindungsgemäßen Verfahrens zur Steuerung von Materialströmen am Beispiel der oben gezeigten Fahrzeugproduktion näher erläutert. Das Verfahren kann selbstverständlich computergestützt durchgeführt werden.

Die Fertigungslinie 3 arbeitet nach dem sogenannten Perlenketten-Prinzip, d.h. innerhalb eines definierten Produktionszeitraums, der bspw. eine Arbeitswoche mit 5 Tagen sein kann. Zu einem dem Beginn des Produktionszeitraums vorgelagerten Zeitpunkt X wird anhand der anstehenden, konkreten Kundenbestellungen eine Planreihenfolge 14 der zu produzierenden Fahrzeuge 15 in einem Produktionsprogramm, dass vorzugsweise computerbasiert ist, reihenfolge- und volumenstabil festgelegt.

Zu diesem Zeitpunkt X löst die Fixierung der Planreihenfolge 14 des Produktionsprogrammes über die dahinter liegende Stückliste Bedarfe 16 aus, die direkt an den Lieferanten 11 durch präzise Materialabrufe 17 übermittelt werden. Derselbe Materialabruf 17 kann gleichzeitig an einen Transportdienstleister geleitet werden, der für den Transport zwischen Lieferant 11 und Werk 1 zuständig ist. Diese Bedarfe 16 sind Anstoß für die Prozesskette zum bedarfsorientierten Anliefern. Darüber hinaus erfolgt kein weiterer Abruf von Material aus der vorhergehenden externen oder internen Prozessstufe. Das bedeutet, dass nur noch ein einstufiger Abruf durchgeführt wird. Zusätzliche Bedarfsmeldungen oder Abrufe an ein davorliegendes Lager oder einen Puffer sind nicht mehr notwendig. Neben den bedarfsorientierten Materialabrufen sind in definierten Fällen verbrauchsorientierte Materialabrufe möglich.

Die Materialabrufe 17 an die Lieferanten 11 beinhalten alle zur Steuerung des kompletten Materialflusses, also vom Lieferanten 11 bis zum Bedarfsort erforderlichen Informationen (Kommissionier- bzw. Sequenzierzone oder Direktanlieferung an den Verbauort 18 an der Fertigungslinie 3). Die Information der Materialabrufe können zur Kennzeichnung der Ladungsträger und Ladeeinheiten mit Warenanhänger gemäß VDA-Standard verwendet werden. Zu den zusätzlich zum VDA-Standard enthaltenen Informationen auf dem VDA-Warenanhänger gehören beispielsweise der exakte Bedarfszeitpunkt im Wareneingang des Werks 19 (Zeitscheibe in Form von Anlieferdatum und -uhrzeit) und die interne Nachschubroute 20 (Information über den Bedarfsort des Materials).

In einem auf den Zeitpunkt X folgenden Teilprozess T1 fertigt der Lieferant die abgerufenen Materialien und verpackt diese gemäß einem vorgegebenen Verpackungskonzept in definierten Ladeeinheiten 21. Diese werden vorzugsweise während der ganzen Prozesskette beibehalten. Um Leerfahrten zu vermeiden, werden Vollgutladeeinheiten konsequent gegen Leergutladeeinheiten direkt getauscht. Die in den Ladeeinheiten 21 abgelegten Materialien werden am Warenausgang des Lieferanten 11 bereitgestellt.

Auf den Teilprozess T1 folgt ein zweiter Teilprozess T2, der im wesentlichen den Transport des Materials zwischen Lieferant 11 und Werk 1 umfasst. Ein Transportdienstleister steuert die Abholung der Ladeeinheiten 21 beim Lieferanten 11. Durch die Informationen der Materialabrufe 17 kann der Transportdienstleister seine Frachten planen und das angeforderte Material in einem dem exakten Bedarfszeitpunkt im Wareneingang von Werk 1 korrespondierenden Zeitfenster anliefern.

Aus dem exakten Bedarfszeitpunkt im Wareneingang 2 des Werks 1 wird für jede Ladeeinheit 21 der späteste Abholzeitpunkt am Warenausgang des Lieferanten 11 in Verbindung mit den Frachtlaufzeiten ermittelt.

Der zwischen Lieferant 11 und Werk 1 zwischengeschalteter, werksnahe Umschlagpunkt 9 fungiert als Frequenzrichter zwischen bedarfsbezogener Lieferung vom Lieferanten 11 an den Umschlagpunkt 9 und exakt gefordertem Bedarfszeitpunkt im Werk 1. Damit wird der Umschlagpunkt 9 anhand der Informationen des Materialabrufs 17, Warenanhänger an der Ladeeinheit nach VDA-Standard, zur bedarfsgerechten Sortierung der Ladeeinheiten auf die entsprechenden Zeitfenster genutzt. Alle Ladeeinheiten eines korrespondierenden Zeitfensters werden auf den Shuttle 10 geladen und bedarfsgerecht bspw. im Rundverkehr zum Wareneingang 2 des Werks 1 transportiert.

Im folgenden dritten Teilprozess T3 werden im Wareneingang 2 die Ladeeinheiten 21 anhand der Routeninformation auf Basis der Materialabrufe direkt auf Schleppzugrouten verteilt. Die Be- und Entladung von Shuttle 10 und Schleppzug 13 erfolgt ebenfalls im Vollgut-/Leerguttausch. Die Schleppzüge 13 schieben das Material beispielsweise in angegebene Regalgassen in einen Kommissionierkreis 22 nach und nehmen das korrespondierende Leergut zum Wareneingang 2 mit zurück. Der Behälter bestimmt dabei die erforderliche Kapazität der Betriebsmittel in der Kommissionierzone 4. Die Kapazität der Betriebsmittel hat wiederum Einfluss auf Anliefermenge, Anliefereinheit und Anlieferfrequenz unter Beachtung der maximal zulässigen Reichweite der Betriebsmittel in den Kommissionierzonen. Durch eine zeitliche Kopplung der Materialanlieferungen beim Wareneingang 2 mit dem Shuttle 10 an den Takt der Fertigungslinie 3 kann ein zuverlässiger Vorlauf erreicht werden. Nach Möglichkeit wird in der gesamten Prozesskette mit geringsten Beständen gearbeitet.

Im vierten Teilprozess T4 werden die bereits im Werk 1 befindlichen Materialien zu einem Zeitpunkt Y an einem definierten Meldepunkt 19 der Fertigungslinie 3 mit einem Kommissionierauftrag 23 angefordert. Dieser Zeitpunkt Y liegt zeitlich vor dem tatsächlichen Verbauzeitpunkt am Verbauort 18. Diese Zeitspanne zwischen Zeitpunkt Y und tatsächlicher Verbauzeit am Verbauort 18 beinhaltet alle Prozesszeiten zwischen Wareneingang 2 und Verbauort 18 inklusive Kommissionierung.

Gemäß dem Kommissionierauftrag 23 werden die erforderlichen Bauteile auf einem Kommissionierwagen 24 für den Transport an die entsprechende Arbeitsstation, also an den Verbauort 18, an einem Kommissionierbahnhof 25 bereitgestellt. Von dort transportieren entsprechende Fahrzeuge 26, z.B. führerlose Transporteinheiten, die Kommissionierwagen 24 an den Verbauort 18.

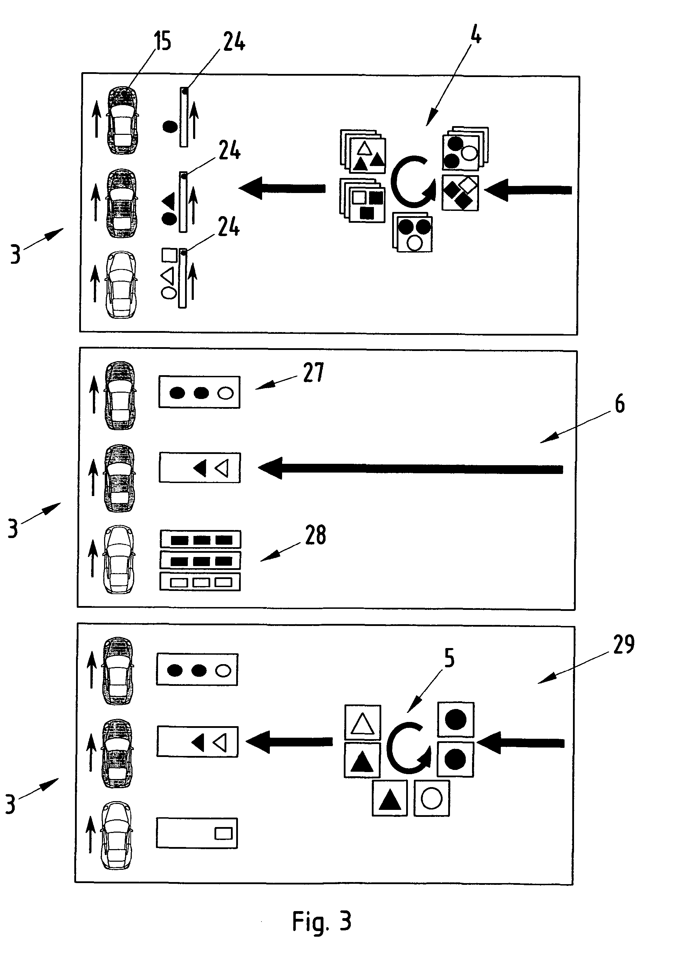

Wie aus Fig. 3 ersichtlich, gibt es neben der unter Fig. 2 beschriebenen vorkommissionierten, fahrzeugbezogenen kommissionierten Bandanstellung noch die stationsbezogene sequenzierte oder die stationsbezogene sortenreine Bandanstellung an der Fertigungslinie. In Fig. 3 stellt die obere Darstellung die vorkommissionierte, fahrzeugbezogene Bandanstellung dar, bei der mittels einer zwischen geschalteten Kommissionierzone 4 notwendiges Material für den Verbauort 18 auf einem Kommissionierwagen 24 zusammengestellt wird.

In der mittleren Darstellung in Fig. 3 ist die Direktabwicklung 6 von Material an die Fertigungslinie 3 dargestellt. Hierzu wird das Material mit seinen Ladeeinheiten 21 direkt vom Wareneingang an den Verbauort an Fertigungslinie 3 transportiert und bereitgestellt. Die Direktabwicklung kann sequenziert oder sortenrein erfolgen.

Die sequenzierte Form der direkten Bandanstellung ist mit Bezugszeichen 27 dargestellt und wird bspw. dann gewählt, wenn die Bauteile eine gewisse Größe oder ein Gewicht überschreiten. Das Bauteil besitzt einen konkreten Produktionsnummernbezug zu dem zu fertigenden Fahrzeug 15.

Bauteile, beispielsweise Kleinteile, die keinen konkreten Produktionsnummernbezug haben, können direkt sortenrein ans Band angestellt werden. Bei dieser mit Bezugsziffer 28 gekennzeichneten Bandanstellung werden die Bauteile variantenfrei in der Ladeeinheit 21 an das Band angestellt und dort wahlfrei aus ebendieser Ladeeinheit 21 entnommen.

Bei der Direktanstellung an die Fertigungslinie 3, unabhängig ob sequenziert oder sortenrein, entfallen bei der Berechnung der Prozesszeit die zeitlichen Aufwendungen für die Kommissionierung und Losbildung.

Die untere Darstellung in Fig. 3 zeigt eine sequenzierte, stationsbezogene Bandanstellung 29. In einer Sequenzierzone 5 werden die Bauteile in der richtigen Reihenfolge vorsortiert und an der Fertigungslinie 3 bereitgestellt. Bei der Berechnung der Prozesszeit ist die Sequenzierung mit zu berücksichtigen.

## Patentansprüche

1. Verfahren zur Steuerung von Materialien und/oder Informationen für eine Fertigung von Produkten, insbesondere von Fahrzeugen oder Fahrzeugkomponenten, vom Lieferanten des benötigten Materials, insbesondere Bauteile, Module oder Sätze, bis zum Verbauort an einer Arbeitsstation einer Linienproduktion in einem Produktionswerk (1) mit folgenden Schritten:
a) Festlegung einer stabilen Planreihenfolge für die zu fertigenden Produkte innerhalb eines definierten Produktionszeitraums zu einem dem Beginn dieses Produktionszeitraums vorgelagerten Zeitpunkt (X),
b) Ermittlung eines Bedarfszeitpunktes, an dem das jeweilige Material am Verbauort benötigt wird, auf Basis der Planreihenfolge,
c) Ermittlung eines exakten Bedarfszeitpunktes, an dem das jeweilige Material an einem Wareneingang der Linienproduktion angeliefert werden soll, ausgehend vom Bedarfszeitpunkt unter Berücksichtigung einer Offsetzeit, die sich aus allen Prozesszeiten zwischen Wareneingang und Verbauort sowie einer Dispovorlaufzeit, die einen Risikoaufschlag abbildet, zusammensetzt,
d) Bündelung gleicher bzw. gleichartiger Materialien eines Lieferanten zu einem bedarfsgerechten Los unter Berücksichtigung der Kapazität der verwendeten Betriebsmittel,
e) Ermittlung des Abholzeitpunktes, an dem das Los spätestens beim Warenausgang Lieferanten des Materials abgeholt werden muss, ausgehend vom Bedarfszeitpunkt im Wareneingang Produktionswerk auf Basis von Frachtlaufzeiten zwischen dem Lieferanten, einem Umschlagpunkt und dem Wareneingang.

2. Verfahren nach Anspruch 1,
**dadurch gekennzeichnet,**
**dass** zum vorgelagerten Zeitpunkt (X) ein Materialabruf für den definierten Produktionszeitraum an den jeweiligen Lieferanten (11) übermittelt wird, der zumindest den Bedarfszeitpunkt im Wareneingang und/oder das korrespondierende Zeitfenster und/oder den Anlieferort umfasst.

3. Verfahren nach Anspruch 1 oder 2,
**dadurch gekennzeichnet,**
**dass** zum vorgelagerten Zeitpunkt (X) der Materialabruf für den definierten Produktionszeitraum an einen Transportdienstleister übermittelt wird, der den Transport des Loses in vorgegeben Ladeeinheiten vom Warenausgang des Lieferanten (11) an den Wareneingang (2) des Werks (1) durchführt.

4. Verfahren nach Anspruch 1 oder 2,
**dadurch gekennzeichnet,**
**dass** der Lieferant (11) in einem Teilprozess (T1) das abgerufene Material produziert und dieses in der Ladeeinheit zum Abholzeitpunkt am Warenausgang spätestens bereitstellt.

5. Verfahren nach Anspruch 1 oder 4,
**dadurch gekennzeichnet,**
**dass** der Transportdienstleister das bereitgestellte Material vom Lieferanten (11) in dem die Ladeeinheit zu einem Umschlagpunkt (9) transportiert, an welchem das Material einem mit dem jeweiligen Bedarfszeitpunkt im Wareneingang Werk (1) korrespondierenden Zeitfenster zugeordnet wird.

6. Verfahren nach Anspruch 5,
**dadurch gekennzeichnet,**
**dass** zwischen dem Umschlagpunkt (9) und dem Wareneingang (2) ein Shuttle (10) verkehrt, der entsprechend den Zeitfenstern den Wareneingang (2) anfährt.

7. Verfahren nach Anspruch 6,
**dadurch gekennzeichnet,**
**dass** das am Wareneingang (2) zu einem bestimmten Zeitfenster angelieferte Material zusammen mit der Ladeeinheit (21) auf ein internes Transportmittel, insbesondere auf einen Schleppzug (13), entladen wird.

8. Verfahren nach Anspruch 7,
**dadurch gekennzeichnet,**
**dass** das interne Transportmittel die Ladeeinheit einer Kommissionierzone (22) zuführt.

9. Verfahren nach Anspruch 7,
**dadurch gekennzeichnet,**
**dass** das interne Transportmittel die Ladeeinheit einer Sequenzierszone (5) zuführt.

10. Verfahren nach Anspruch 7,
**dadurch gekennzeichnet,**
**dass** das interne Transportmittel die Ladeeinheit direkt an den Verbauort (18) liefert.

11. Verfahren nach Anspruch 1 oder 8,
**dadurch gekennzeichnet,**
**dass** an einem dem Verbauort (18) vorgeschalteten Meldepunkt (19) zu einem Zeitpunkt (Y) ein Kommissionierauftrag (23) ausgelöst wird.

12. Verfahren nach Anspruch 1,
**dadurch gekennzeichnet,**
**dass** eine theoretisch erforderliche Anlieferfrequenz auf Basis der Anlieferform und/oder Anliefermenge des benötigten Materials ermittelt wird und diese bei der Ermittlung des Bedarfszeitpunktes, an dem die Ladeeinheit am Verbauort benötigt wird, mit berücksichtigt wird.

13. Verfahren nach Anspruch 1 oder 12,
**dadurch gekennzeichnet,**
**dass** bei bedarfsorientierten Abrufmengen von Materialien der späteste Bedarfszeitpunkt auf Basis des in der Gesamtheit der Anliefermenge enthaltenen Materials, das zuerst am Verbauort benötigt wird, berechnet wird.

14. Verfahren nach Anspruch 1,
**dadurch gekennzeichnet, dass** Transportrisikozeiten bei der Berechnung des spätesten Abholzeitpunktes beim Lieferanten zuzüglich zu den reinen Frachtlaufzeiten berücksichtigt werden.

15. Verfahren nach Anspruch 1,
**dadurch gekennzeichnet,**
**dass** die Dispovorlaufzeit Risikozeiten zwischen dem Verbauort und letztem Umschlagort in der externen Transportkette abbildet.

16. Verfahren nach Anspruch 1,
**dadurch gekennzeichnet,**
**dass** für zeitlich vor dem Bedarfszeitpunkt angeliefertes Material am Verbauort eine räumliche Freilassung eingeplant wird.

17. Verfahren nach einem der vorgenannten Ansprüchen,
**dadurch gekennzeichnet,**
**dass** Ladeeinheiten, auf denen das Material bis zum Verbauort angeliefert wird, in einem Vollgut- / Leergut- Kreislauf gehalten werden.

18. Computerprogrammprodukt mit Programmcodemitteln, die auf einem computerlesbaren Datenträger gespeichert sind, um alle Berechnungen des Verfahrens nach einem der vorgenannten Ansprüche durchzuführen, wenn das Computerprogramm auf einem Computer oder einer entsprechenden Recheneinheit ausgeführt wird.
